# EUROPÄISCHE PATENTSCHRIFT

(11) **EP 0 512 083 B1**
(45) Veröffentlichungstag und Bekanntmachung des Hinweises auf die Patenterteilung: **23.08.1995**
(21) Anmeldenummer: 91919711.1
(22) Anmeldetag: 15.11.1991
(51) Int. Cl.: B25J 9/04, B25J 9/08, B25J 9/00

(54) **SCHWENKARMROBOTER**
SWIVELLING-ARM ROBOT
ROBOT A BRAS PIVOTANT

(30) Priorität: 28.11.1990 DE 4037773
(43) Veröffentlichungstag der Anmeldung: 11.11.1992
(73) Patentinhaber: ROBERT BOSCH GMBH, 70442 Stuttgart (DE)
(72) Erfinder: GOSDOWSKI, Gerhard, D-7120 Bietigheim (DE); BUTTAU, Hans-Peter, D-7128 Lauffen (DE); LEONHARDT, Michael, D-7050 Waiblingen (DE)
(86) Internationale Anmeldenummer: DE9100886
(87) Internationale Veröffentlichungsnummer: WO9209407

(56) Entgegenhaltungen:
- EP-A- 0 265 835
- WO-A-89/04744
- DE-A- 3 323 976
- FR-A- 2 590 197

## Beschreibung

Die Erfindung geht aus von einem Schwenkarmroboter nach der Gattung des Hauptanspruchs Siehe z.B. FR-A-2 590 197. Die bekannten Schwenkarmroboter dieser Gattung besitzen Gehäuseteile, die aus Gußkonstruktionen oder geschweißter Verbundkonstruktionen aus Blech oder Gußhalbzeugen aufgebaut sind. Die Guß- oder Schweißkonstruktionen erfordern einen hohen Materialeinsatz mit hohem Bearbeitungsaufwand. Aus EP-B1 265 835 ist es bekannt, den Schwenkarm eines Industrieroboters aus zwei, die Armlänge aufweisenden, gleichen stranggepreßten Einzelelementen auszubilden. Hier verläuft die Hohlform in Richtung der Auslegung des Schwenkarms, wodurch für Schwenkachsen zusätzliche Lagerstellen in den Schwenkarm eingebracht werden müssen.

### Vorteile der Erfindung

Der erfindungsgemäße Schwenkarmroboter mit den kennzeichnenden Merkmalen des Hauptanspruchs hat demgegenüber den Vorteil, daß durch die Reduzierung des Materialeinsatzes eine Erhöhung der Roboterdynamik möglich ist und zugleich der Fertigungsaufwand auch dadurch reduziert wird, daß die Lagerstellen für die Schwenkachsen bereits in die Profile eingeformt sind.

Durch die in den Unteransprüchen aufgeführten Maßnahmen sind vorteilhafte Weiterbildungen des im Hauptanspruch angegebenen Schwenkarmroboters möglich. Besonders vorteilhaft ist, daß durch die modulare Ausbildung der Strangpreßprofile, deren Mehrfachverwendung gewährleistet ist. Gleichzeitig läßt sich durch Austausch eines einzelnen Profils die Reichweite des Schwenkarmroboters variieren.

### Zeichnung

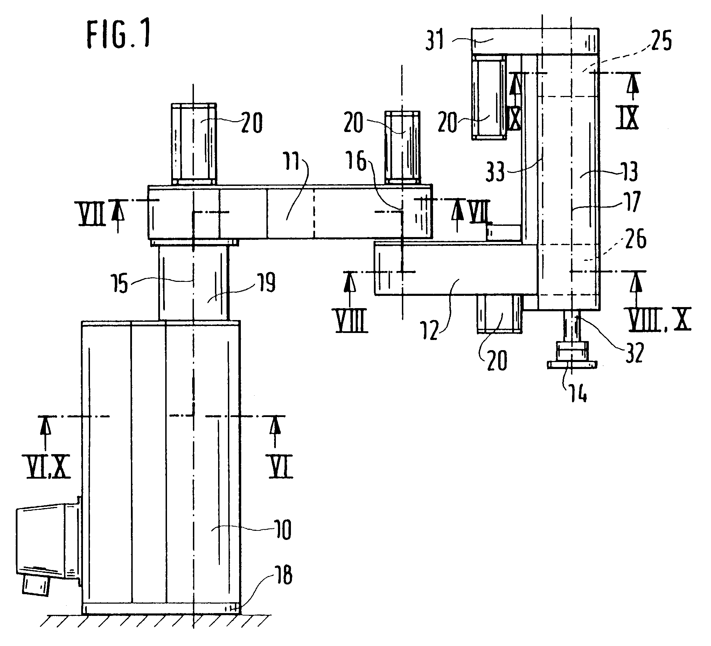

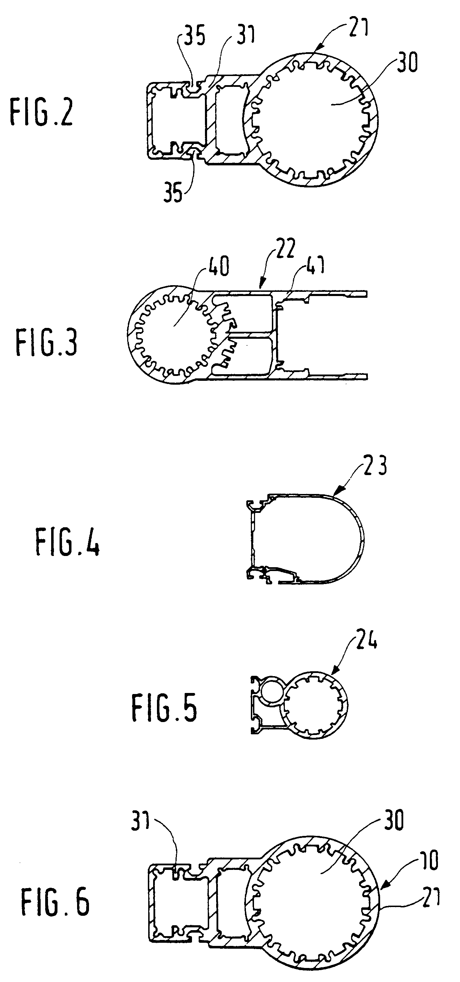

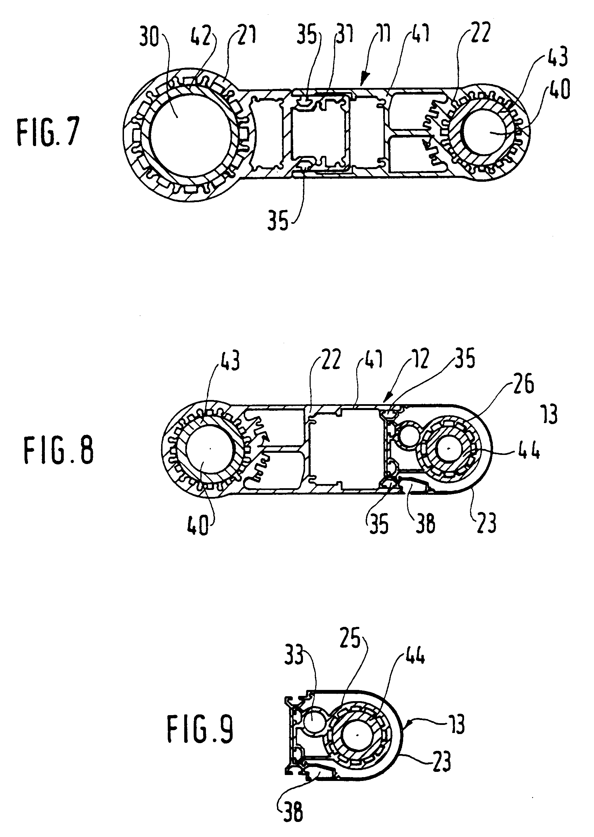

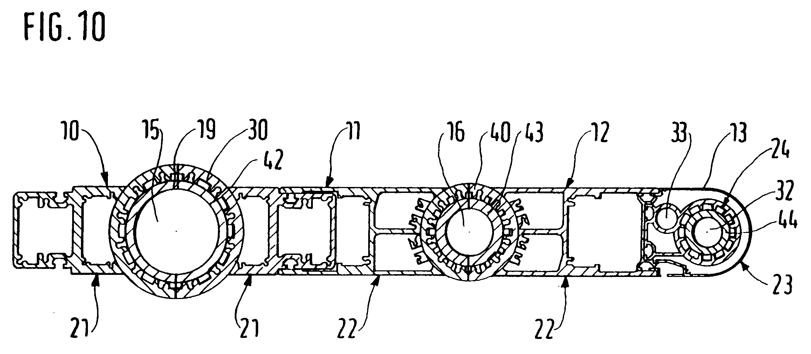

Ein Ausführungsbeispiel der Erfindung ist in der Zeichnung dargestellt und in der nachfolgenden Beschreibung näher erläutert. Es zeigen Figur 1 eine Prinzipdarstellung eines Schwenkarmroboters in Seitenansicht, Figur 2 bis 5 den Querschnitt der einzelnen verwendeten Strangpreßprofile, Figur 6 den Querschnitt des Profils des Stativkörpers gemäß Linie VI-VI aus Figur 1, Figur 7 einen Querschnitt durch den ersten Schwenkarm gemäß Linie VII-VII aus Figur 1, Figur 8 einen Querschnitt des zweiten Schwenkarms gemäß Linie VIII-VIII aus Figur 1, Figur 9 einen Querschnitt gemäß Linie IX-IX aus Figur 1 und Figur 10 einen Querschnitt entlang der Linie X-X aus Figur 1.

### Beschreibung des Ausführungsbeispiels

Der Schwenkarmroboter besitzt einen Stativkörper 10, aus dem nach oben eine Stativverlängerung 19 herausragt, an welcher um eine erste Schwenkachse 15 ein erster Schwenkarm 11 drehbar gelagert ist. Der Stativkörper 10 ist auf einer Grundplatte 18 befestigt. Der Schwenkarm 11 besitzt eine zweite Schwenkachse 16, in der ein zweiter Schwenkarm 12 drehbar gelagert ist, wobei im vorliegenden Ausführungsbeispiel der zweite Schwenkarm 12 unterhalb des ersten Schwenkarms 11 angeordnet ist. Es ist aber gleichsam denkbar, den zweiten Schwenkarm 12 oberhalb des ersten Schwenkarms 11 anzulenken. Beide Schwenkarme 11, 12 sind parallel zueinander in der horizontalen Ebene verschwenkbar.

Den Abschluß des zweiten Schwenkarms 12 bildet eine Arbeitsvorrichtung, hier eine Hub-Dreheinheit 13, in der eine an einer Pinole 32 angeordnete Greiferaufnahme 14, um die Drehachse 17 drehbar und in vertikaler Richtung längsverschiebbar gelagert ist.

In den Schwenkachsen 15 und 16 ist am ersten Schwenkarm 11 jeweils ein Antrieb 20, beispielsweise ein Elektromotor mit Getriebe angeflanscht, mit dem die Schwenkbewegung der beiden Schwenkarme 11 und 12 erzeugt wird. Ein weiterer Elektromotor 20 ist über ein Getriebe 34 am oberen Ende der Hub-Dreheinheit 13 angesetzt, der eine mit einer Strich-Punkt-Linie angedeutete Spindel 33 antreibt. Die Drehbewegung der Spindel 33 wird mittels nicht dargestellter Bauelemente auf die Pinole 32 derart übertragen daß die Pinole 32 eine translatorische Bewegung ausübt. Ein vierter Elektromotor 20 ist am unteren Teil der Hub-Dreheinheit 13 angeordnet und besitzt ebenfalls nicht dargestellte Übertragungsmittel auf die Pinole 32, um diese in Rotation zu versetzen.

Aus Figur 2 bis 5 gehen die für den modularen Aufbau des Schwenkarmroboters verwendeten Strangpreßprofile 21 bis 24 hervor. Das Profil 21 dient gemäß Figur 6 als Stativkörper 10. Der Profilquerschnitt des Stativkörpers 10 besteht aus einem Hohlzylinder 30 und einem seitlich daran ansetzenden, mit zwei Hohlräumen versehenen und in sich geschlossenen Arm 31. Die beiden vom Profil 21 gebildeten Hohlräume am Arm 31 dienen als Installationsraum für die Energieversorgungsleitungen. Im Hohlzylinder 30 ist die Stativverlängerung 19 befestigt.

Der erste Schwenkarm 11 ist gemäß Figur 7 aus den Profilen 21 und 22 zusammengesetzt. Das Profil 22 (Figur 3) besitzt ebenfalls einen Hohlzylinder 40 an dem sich seitlich ein Arm 41 anschließt, der jedoch seitlich offen ist. Die Öffnung des Profils 22 ist dabei so geformt, daß sie den Arm 31 des Profils 21 übergreift. Die Befestigung beider Profile kann beispielsweise mittels zweier an jeder Seite eingebrachter Schrauben erfolgen, die in jeweils ein in den hinterschnittenen Nuten 35 eingeführtes Befestigungselement, beispielsweise eine Hammermuttern, eingeschraubt sind.

Der zweite Schwenkarm 12 enthält gemäß Figur 8 die Profile 22, 23 und 24 (Figur 3 bis 5). Am Arm 41 des Profils 22 ist das Profil 23 befestigt, wobei die Befestigung, wie beim Schwenkarm 11, mittels Verschraubung folgt. Das Profil 23 erstreckt sich über die gesamte Länge der Hub-Dreheinheit 13 und bildet damit deren Gehäuse. Längs des Profils 23 ist eine Ausnehmung 38 angeformt, welche als Kabelführungskanal dient.

Innerhalb des Profils 23 befinden sich zwei Profilabschnitte des Profils 24, welche mit der bereits beschriebenen Befestigungstechnik verschraubt sind. Das Profil 24 ist im wesentlichen aus zwei Hohlzylindern gebildet, die jeweils als Lagerstellen 25,26 für die Pinole 32 und die Spindel 33 vorgesehen sind. Dabei sind die beiden Profilabschnitte des Profils 24 in einem Abstand voneinander angeordnet, wobei im vorliegenden Ausführungsbeispiel, wie aus Figur 1 zu entnehmen ist, die erste Lagerung 25 am oberen Ende der Hub-Dreheinheit 13 angeordnet und gemaß Figur 8 die zweite Lagerung 26 in Verlängerung des zweiten Schwenkarms 12 positioniert ist.

Der modulare Aufbau des gesamten Schwenkarmroboters geht aus Figur 10 hervor. Das Profil 21 bildet den Stativkörper 10. Das gleiche Profil 21 ist mit dem Hohlzylinder 30 auf die Stativverlängerung 19 drehbar aufgesetzt, die für den ersten Schwenkarm 11 die Schwenkachse 15 bildet. In der zweiten Schwenkachse 16 sind die beiden Schwenkarme 11 und 12 drehbar gelagert, wobei die Lagerung mittels der Hohlzylinder 40 zweier übereinander angeordneter Profile 22 realisiert ist. Den Abschluß des Schwenkarms 12 bildet die Hub-Dreheinheit 13, mit der Pinole 32 und der der Spindel 33. Dabei ist es zweckmäßig, die Lagerung der Schwenkachsen 15 und 16 sowie der Dreh- und Hubachse der Pinole 32 jeweils in einer Lagerbuchse 42, 43, 44 und 45 vorzunehmen.

## Patentansprüche

1. Schwenkarmroboter, welcher aus mindestens einem Schwenkarm (11, 12) und einer am äußeren Ende des Schwenkarms (11, 12) vorgesehenen Arbeitsvorrichtung (13) besteht und parallel verlaufende Gelenkachsen (15, 16, 17) aufweist, dadurch gekennzeichnet, daß mindestens ein Schwenkarm aus mindestens einem Strangpreßprofil (21, 22, 23) gebildet ist, dessen Hohlform in Richtung der Gelenkachse (15, 16, 17) verläuft, wobei mindestens eine Lagerstelle für eine Gelenkachse im Strangpreßprofil (21, 22, 23) eingeformt ist, so daß die Gelenkachse (15, 16, 17) innerhalb des Strangpreßprofils (21, 22, 23) angeordnet ist.

2. Schwenkarmroboter nach Anspruch 1, dadurch gekennzeichnet, daß die Strangpreßprofile (21, 22) für die Schwenkarme (11, 12) modular derart ausgebildet sind, daß in jeder Gelenkachse (15, 16) zwei gleiche Profile in parallelen Ebenen gegeneinander schwenkbar angeordnet sind, und daß in einer Ebene mindestens zwei Profile zur Bildung des Schwenkarms miteinander verbunden sind.

3. Schwenkarmroboter nach Anspruch 2, dadurch gekennzeichnet, daß ein erstes Profil (21) einen Stativkörper (10), das gleiche Profil (21) mit einem zweiten Profil (22) den ersten Schwenkarm (11) und das zweite Profil (22) mit dem dritten Profil (23) einen zweiten Schwenkarm (12) bildet.

4. Schwenkarmroboter nach Anspruch 1, dadurch gekennzeichnet, daß die Arbeitsvorrichtung (13) eine Hub-Dreheihheit mit einer Greiferaufnahme (14) ist, deren Gehäuse von einem Profil (23) gebildet ist, und daß innerhalb des Profils (23) ein weiteres Profil (24) angebracht ist, welches Lagerstellen (25, 26) für die Dreh- und Hubachsen der beweglichen Elemente der Hub-Dreheinheit (13) realisiert.

5. Schwenkarmroboter nach einem der vorhergehenden Ansprüche, dadurch gekennzeichnet, daß in den Schwenkachsen (15, 16) und/oder in den Drehachsen der Lagerstellen (25, 26) die jeweiligen Profile (21 bis 24) mit Flächen und/oder mit angeformten Elementen versehen sind, die ein Anflanschen von Antrieben erlauben.

6. Schwenkarmroboter nach einem der vorhergehenden Ansprüche, dadurch gekennzeichnet, daß an den Verbindungsstellen zweier Profile mindestens an einem Profil an beiden Seiten hinterschnittene Nuten (35) angeformt sind, die Befestigungselemente, beispielsweise Hammermuttern, aufzunehmen vermögen mittels derer die Verschraubung beider Profile realisiert ist.

## Claims

1. Pivoting-arm robot, which consists of at least one pivoting arm (11, 12) and of a working device (13) provided at the outer end of the pivoting arm (11, 12) and which has axes of articulation (15, 16, 17) running parallel, characterized in that at least one pivoting arm is formed from at least one extruded profile (21, 22, 23), the hollow shape of which runs in the direction of the axis of articulation (15, 16, 17), at least one bearing point for an axis of articulation being formed in the extruded profile (21, 22, 23), so that the axis of articulation (15, 16, 17) is arranged within the extruded profile (21, 22, 23).

2. Pivoting-arm robot according to Claim 1, characterized in that the extruded profiles (21, 22) for the pivoting arms (11, 12) are of modular design, such that, in each axis of articulation (15, 16), two identical profiles are arranged pivotably relative to one another in parallel planes, and in that, in one plane, at least two profiles are connected to one another to form the pivoting arm.

3. Pivoting-arm robot according to Claim 2, characterized in that a first profile (21) forms a stand body (10), the same profile (21) together with a second profile (22) forms the first pivoting arm (11), and the second profile (22) together with the third profile (23) forms a second pivoting arm (12).

4. Pivoting-arm robot according to Claim 1, characterized in that the working device (13) is a lift-and-turn unit with a gripper receptacle (14), the housing of which is formed by a profile (23), and in that within the profile (23) is mounted a further profile (24) which provides bearing points (25, 26) for the turning and lifting axes of the movable elements of the lift-and-turn unit (13).

5. Pivoting-arm robot according to one of the preceding claims, characterized in that, in the pivoting axes (15, 16) and/or in the turning axes of the bearing points (25, 26), the respective profiles (21 to 24) are provided with faces and/or with formed-on elements which allow drives to be flanged on.

6. Pivoting-arm robot according to one of the preceding claims, characterized in that undercut grooves (35) are formed on at least one profile on both sides at the connection points of two profiles and can receive fastening elements, for example hammer-head nuts, by means of which the screwing together of the two profiles is carried out.

## Revendications

1. Robot à bras pivotant composé d'au moins un bras pivotant (11, 12) avec à son extrémité extérieure (11, 12) un dispositif de travail (13) et des axes d'articulation (15, 16, 17) parallèles, caractérisé en ce qu'au moins un bras pivotant est formé d'au moins un profilé extrudé à presse (21, 22, 23) dont la cavité s'étend dans la direction de l'axe d'articulation (15, 16, 17), au moins un point de palier étant formé pour un axe d'articulation dans le profilé extrudé (21, 22, 23) pour que l'axe d'articulation (15, 16, 17) se trouve à l'intérieur du profilé extrudé (21, 22, 23).

2. Robot à bras pivotant selon la revendication 1, caractérisé en ce que les profilés extrudés à la presse (21, 22) pour les bras pivotants (11, 12) sont modulaires pour avoir dans chaque axe d'articulation (15, 16) deux profilés identiques pivotants respectivement dans les plans parallèles et en ce que dans un premier plan au moins deux profilés sont reliés pour former le bras de pivotement.

3. Robot à bras pivotant selon la revendication 2, caractérisé en ce qu'un premier profilé (21) forme un corps de pied (10), le même profilé (21) forme avec un second profilé (22) le premier bras pivotant (11) et le second profilé (22) forme avec le troisième profilé (23) un second bras pivotant (12).

4. Robot à bras pivotant selon la revendication 1, caractérisé en ce que le dispositif de travail (13) est un ensemble de levage et de rotation avec un support de moyen de préhension (14) dont le carter est formé par un profilé (23) et en ce qu'à l'intérieur du profilé (23) est logé un autre profilé (24) formant les points de palier (25, 26) pour les axes de rotation et de levage des éléments mobiles de l'ensemble de levage et de rotation (13).

5. Robot à bras pivotant selon l'une des revendications précédentes, caractérisé en ce que dans les axes de pivotement (15, 16) et/ou dans les axes de rotation des points de palier (25, 26), les profilés respectifs (21-24) sont munis de surfaces et/ou d'éléments formés, qui permettent de fixer par bridage, des moyens d'entraînement.

6. Robot à bras pivotant selon l'une des revendications précédentes, caractérisé en ce qu'au point de liaison de deux profilés, on a formé des rainures à contredépouille (35) des deux côtés sur au moins un profilé, qui peuvent recevoir des éléments de fixation par exemple des écrous marteau, permettant de réaliser le vissage des deux profilés.
